# FASCICULE DE BREVET EUROPEEN

(11) **EP 0 967 473 B1**
(45) Date de publication et mention de la délivrance du brevet: **15.10.2003**
(21) Numéro de dépôt: 99401362.1
(22) Date de dépôt: 04.06.1999
(51) Int. Cl.: G01N 1/34

(54) **Procédé et unite de prelevement d'aldehydes et cetones contenus dans des gaz d'échappement**
Verfahren und Vorrichtung zur Entnahme von Aldehyden und Ketonen in Abgasen
Method and unit for sampling aldehydes and ketones in exhaust gases

(30) Priorité: 25.06.1998 FR 9808113
(43) Date de publication de la demande: 29.12.1999
(73) Titulaire: Institut Français du Pétrole, 92852 Rueil-Malmaison Cedex (FR)
(72) Inventeur: Pasquereau, Michel, 78500 Sartrouville (FR); Papagni, Jean-Francois, 78470 Saint Remy Les Chevreuses (FR); Levesque, Richard, 92150 Suresnes (FR); Dayde, Laurent, Appartement 4026, 92150 Suresnes (FR)

(56) Documents cités:
- EP-A- 0 047 434
- EP-A- 0 272 552
- EP-A- 0 316 688
- EP-A- 0 429 143
- DE-A- 3 822 360
- DE-A- 4 217 263
- US-A- 4 758 521
- US-A- 5 205 988
- US-A- 5 279 146

## Description

La présente invention concerne le domaine du prélèvement de fluides gazeux et plus particulièrement du prélèvement des aldéhydes et cétones contenus dans des gaz tels que les gaz d'échappement de moteurs à combustion interne. Tout gaz émis par des machines thermiques à combustion et contenant notamment des aldéhydes et des cétones peut être prélevé conformément à l'invention.

Une application particulière de l'invention concerne le prélèvement des aldéhydes et cétones, polluants spécifiques non réglementés, émis dans les gaz d'échappement de moteurs d'automobile installés par exemple en cellules d'essais.

Les méthodes de prélèvement connues consistent essentiellement à diluer les gaz précités puis à les faire passer sur un adsorbant solide particulier qui piège les composés carbonylés. Le piège chimique est traité ultérieurement, dans un laboratoire où il est analysé afin de quantifier individuellement chacun des polluants.

Au niveau des mesures d'aldéhydes et cétones dans les gaz d'échappement d'automobile, la majorité des laboratoires d'analyse utilise, soit une technique de prélèvement par barbotage des gaz d'échappement dans une solution liquide de dérivation appropriée (acétonitrile comme solvant), soit une cartouche de silice greffée de Dinitrophénylhydrazine qui permettent de prélever et dériver chimiquement en composés hydrazones ces espèces hydrocarbonées. La cartouche greffée doit ensuite subir un traitement au laboratoire d'analyse qui permet de mettre en solution ces composés dans un solvant (acétonitrile). Cette dernière technique de prélèvement et de mesure possède l'avantage d'être plus efficace, simple d'utilisation et offre des possibilités de stockage à moyen terme des échantillons. Les dérivés hydrazones obtenus par l'une ou l'autre des techniques de prélèvement sont ensuite séparés en injectant un aliquote de cette solution dans un ensemble chromatographique CLHP (Chromatographie Liquide Haute Performance) et détectés individuellement en absorption UV.

en Chaque laboratoire s'adapte avec son propre matériel de mesure disponible et travaille sans liaison interactive entre les différents éléments autour du support de prélèvement, sans assurer véritablement un protocole de prélèvement fiable, précis et reproductible.

La présente invention permet l'utilisation de cartouches disponibles dans le commerce, leur mise en place rapide et étanche dans un support de prélèvement, la programmation simple des paramètres d'échantillonnage, l'automaticité complète du prélèvement lorsque l'ordre est donné de démarrer le piégeage des effluents. Elle assure un contrôle permanent des conditions de prélèvement en cours du cycle de prélèvement (débits, températures, pertes de charge, durée d'échantillonnage...), la mise en alerte immédiate en cas de dysfonctionnement ou d'un non respect d'une procédure.

En outre la présente invention élimine toute pollution de la cartouche de prélèvement après sa mise en place dans son support de prélèvement.

Ainsi, la présente invention a pour objet une unité de prélèvement des aldéhydes et cétones contenus dans des gaz d'échappement préalablement dilués et issus de machines thermiques à combustion, comprenant un circuit de piégeage des aldéhydes et cétones et des moyens de contrôle associés.

Conformément à l'invention, l'unité comprend en outre
- un circuit de simulation du passage des gaz dans le circuit de piégeage, disposé en parallèle du circuit de piégeage,
- un moyen pour faire passer les gaz d'échappement dilués soit dans le circuit de piégeage soit dans le circuit de simulation,
- un capteur de température en amont du moyen de piégeage,
- un capteur de pression en aval des deux circuits,
- un régulateur de débit massique,
- un moyen de mise en circulation des gaz, tel qu'une pompe.

Plus particulièrement, le circuit de piégeage comprend une cartouche spécifique disposée en série avec le capteur de température.

En outre, le circuit de simulation comprend un filtre en série avec un moyen de vannage.

De façon spécifique, le moyen pour dévier sélectivement les gaz dilués vers le circuit de piégeage ou le circuit de simulation, comprend deux électrovannes trois voies disposées respectivement en amont et en aval des deux circuits parallèles.

En outre l'unité selon l'invention peut comprendre un moyen de dilution des gaz d'échappement.

Avantageusement, le moyen de dilution peut lui-même comprendre une sonde de dilution ayant une entrée pour les gaz prélevés et une sortie connectée à l'entrée du circuit d'échantillonnage, et un micro tunnel qui coopère avec ladite sonde.

Par ailleurs, ledit micro-tunnel comprend une sortie reliée à l'entrée de la sonde de dilution par une liaison pour de l'air de dilution, l'entrée du micro-tunnel recevant une partie des gaz dilués issus de la sonde de dilution.

Sans sortir du cadre de l'invention, l'unité comprend en outre un moyen de détection et d'alerte d'un dysfonctionnement de l'un ses éléments.

La présente invention concerne en outre un procédé de prélèvement des aldéhydes et cétones contenus dans des gaz d'échappement dilués issus de machines thermiques à combustion consistant à piéger lesdits aldéhydes et cétones dans un circuit spécifique.

Le procédé selon l'invention consiste en outre à faire passer, pendant un certain temps, les gaz dilués dans un circuit de simulation préalablement à leur passage dans le circuit de piégeage, les deux circuits étant disposés en parallèle.

Selon l'invention, on contrôle la température des gaz dans le circuit de piégeage.

En outre, on contrôle la pression des gaz en aval des circuits de simulation et de piégeage.

Par ailleurs, on fait passer les gaz dans le circuit de piégeage lorsque l'on juge que la composition des gaz est suffisamment représentative.

D'autres avantages, caractéristiques, détails de l'invention apparaîtront mieux à la lecture de la description qui va suivre en référence aux dessins annexés sur lesquels :
- la figure 1 est un schéma de principe de l'invention; et
- la figure 2 est un schéma d'un mode de réalisation de l'invention.

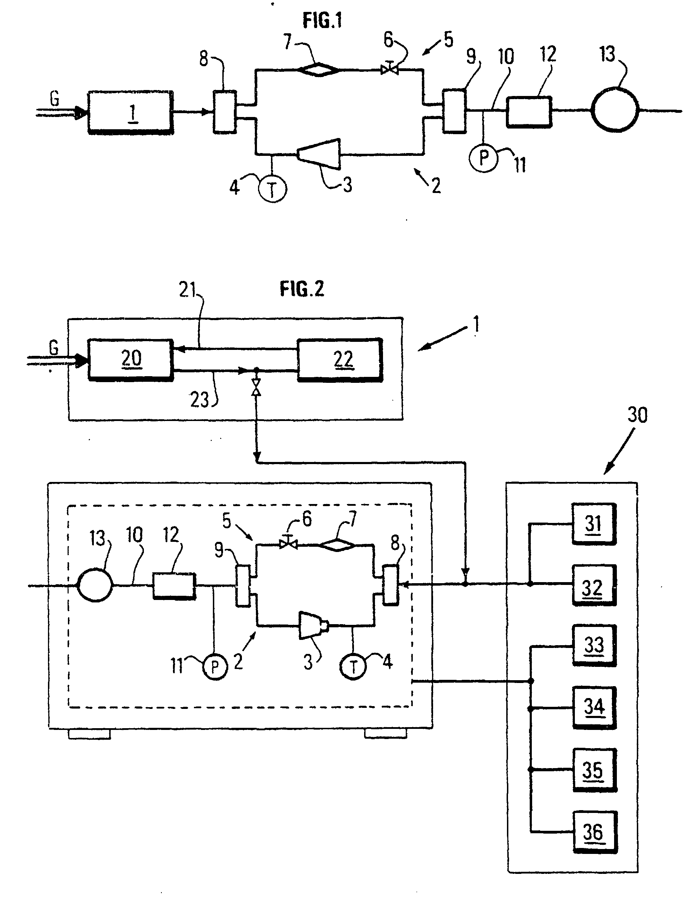

L'unité de prélèvement telle que représentée sur la figure 1 est associée à des moyens 1 de dilution dans lesquels arrivent les gaz selon la double flèche G.

Un fois dilués, les gaz arrivent sur le dispositif de prélèvement proprement dit. Celui-ci comprend deux circuits (ou deux voies) en parallèle : le premier est un circuit 2 de piégeage des aldéhydes et cétones avec par exemple une cartouche spécifique 3 et un capteur de température 4 disposé en amont de la cartouche 3. La cartouche peut être par exemple une cartouche greffée DNPH de type Sep-Pak commercialisée par la société Waters.

Le deuxième circuit 5 est destiné à simuler la perte de charge créée lors du passage du gaz sur la cartouche spécifique 3. La simulation concerne essentiellement le débit et la perte de charge.

Deux électrovannes trois voies 8 et 9 placées respectivement en amont et en aval des deux circuits parallèles 2 et 5, permettent de diriger le flux gazeux vers l'un ou l'autre des circuits 2, 5. Elles permettent donc avantageusement d'isoler la cartouche 3 lorsqu'on est en phase de simulation comme il sera expliqué plus en détail ci-après.

Une seule ligne 10 permet aux gaz ayant transité soit dans le premier circuit 2 soit dans le deuxième circuit 5 de sortir du dispositif de prélèvement.

Un capteur de pression 11 est disposé sur la ligne 10 de sortie commune aux deux circuits.

Un régulateur de débit massique 12 est en outre placé sur la ligne 10, en aval du capteur 11 afin d'assurer la stabilité du débit dans chacune des voies 2 et 5.

Enfin, une pompe de circulation 13 est disposée en aval du régulateur de débit 12.

La figure 2 illustre schématiquement un mode de réalisation préféré de l'invention.

Les mêmes éléments que ceux de la figure 1 s'y retrouvent.

En outre, la figure 2 montre plus en détail les moyens de dilutions 1 associés à l'unité de prélèvement. Ceux-ci peuvent comprendre une sonde de dilution 20 ayant une première entrée G pour les gaz à prélever et une deuxième entrée 21 pour de l'air de dilution qui provient d'un micro-tunnel 22. Dans le micro-tunnel 22 entre une partie des gaz dilués sortant de la sonde 20. L'autre partie des gaz sortant de la sonde 20 est dirigé vers l'entrée du dispositif de prélèvement proprement dit.

Au niveau de l'entrée de l'unité de prélèvement, ces gaz sont maintenus chauds (de l'ordre de 50°C environ) et dilués.

Par ailleurs, un ensemble de commande permet de coordonner le fonctionnement des différents éléments qui viennent d'être décrits. Un coffret de commande 30 renferme la partie "électrique" de l'unité de prélèvement.

Le coffret 30 permet de programmer et d'afficher l'ensemble des paramètres liés au prélèvement : débits, températures, durées. Le coffret 30 peut être installé dans un lieu éloigné du site de prélèvement lui-même.

Ce coffret contient notamment une alimentation 31 de la ligne chauffée et un élément 32 de régulation du chauffage de ladite ligne.

Il est prévu une commande 33 de chaque électrovanne 8, 9, une commande 34 de la pompe 13, un thermocouple 35 associé à la cartouche spécifique 3, une commande 36 de régulation et d'affichage du régulateur 12 de débit massique.

En outre, des alarmes et autres signaux de dysfonctionnement peuvent être prévus.

Ainsi, un procédé de prélèvement suivant l'invention peut être mis en oeuvre. Il consiste notamment à faire passer les gaz dilués, pendant un certain temps, dans le circuit de simulation 5 préalablement à leur passage dans le circuit de piégeage 2.

La représentativité de l'échantillon en début de prélèvement proprement dit est donc assurée grâce à une circulation préalable de l'effluent gazeux dans le circuit de simulation 5.

Par ailleurs grâce à l'ouverture des électrovannes 8, 9 et à la régulation du débit par le moyen 12, le débit de prélèvement est ajusté dès le début du piégeage et pendant tout cycle de fonctionnement.

Lorsque l'effluent gazeux est jugé représentatif, c'est-à-dire après un certain temps de passage dans le circuit 5, les électro-vanne 8, 9 orientent les gaz vers le circuit 2 de piégeage.

Après un certain temps préprogrammé de passage dans le circuit 2, l'ensemble du processus peut être arrêté automatiquement.

Après la phase de prélèvement, les cartouches 3 sont ôtées de leur support et peuvent être traitées par un laboratoire d'analyse.

De façon avantageuse, après la phase de prélèvement, les cartouches peuvent être conservées plus de 30 jours au congélateur (-18°C) avant d'être traitées au laboratoire d'analyse. Cette fonctionnalité est très importante en cas d'une campagne de prélèvement éloignée du site d'analyse ou en cas d'une campagne de mesure comportant un nombre d'échantillons important.

La présente invention permet donc de quantifier des émissions d'aldéhydes et cétones d'une façon à la fois originale et simple. Elle associe toutes les fonctions et éléments nécessaires pour assurer un protocole de prélèvement original, fiable, précis et reproductible.

Elle utilise des cartouches commercialement disponibles et évite ainsi d'utiliser des techniques de prélèvement difficiles à mettre en oeuvre tel que le barbotage des gaz dans une solution liquide. Grâce à sa conception compacte, la présente invention peut être mise en place rapidement sur le site de prélèvement (transportable). En outre, par ses fonctions simples de programmation paramétrique, elle peut être utilisée par un opérateur non spécialiste de l'analyse.

La présente invention a permis de réaliser de nombreuses campagnes de mesure sur des thèmes tels que influence de la nature du carburant sur les émissions de ces composés carbonylés, influence des conditions de fonctionnement moteur, des nouvelles technologies moteur ou efficacité de dispositifs de traitement catalytique des effluents gazeux.

Des tests et études ont été réalisés pour valider les différentes fonctions du dispositif selon l'invention, pour vérifier sa fiabilité et son efficacité de piégeage.

En particulier l'invention a été mise en oeuvre pour des mesures d'aldéhydes et cétones émises par un moteur thermique en condition de fonctionnement stabilisé, et en fonction soit du débit de prélèvement soit d'un taux de dilution imposé.

## Revendications

1. Unité de prélèvement des aldéhydes et cétones contenus dans des gaz d'échappement préalablement dilués et issus de machines thermiques à combustion, comprenant un circuit (2) de piégeage des aldéhydes et cétones, des moyens de contrôle associés, **caractérisée en ce qu'**elle comprend en outre un circuit (5) de simulation du passage des gaz dans le circuit (2) de piégeage, disposé en parallèle du circuit de piégeage,
- un moyen (8, 9) pour faire passer les gaz d'échappement dilués soit dans le circuit de piégeage soit dans le circuit (5) de simulation,
- un capteur de température (4) en amont du moyen de piégeage,
- un capteur de pression (11) en aval des deux circuits (2, 5),
- un régulateur de débit massique (12),
- un moyen de mise en circulation des gaz, tel qu'une pompe (13).

2. Unité de prélèvement selon la revendication 1, **caractérisée en ce que** le circuit de piégeage (2) comprend une cartouche spécifique (3) disposée en série avec le capteur de température (4).

3. Unité de prélèvement selon l'une quelconque des revendications précédentes, **caractérisée en ce que** le circuit de simulation (5) comprend un filtre (7) en série avec un moyen de vannage (6).

4. Unité de prélèvement selon l'une quelconque des revendications précédentes, **caractérisée en ce que** le moyen pour dévier sélectivement les gaz dilués vers le circuit de piégeage (2) ou le circuit de simulation (5) comprend deux électrovannes trois voies (8, 9) disposées respectivement en amont et en aval des deux circuits (2, 5) parallèles.

5. Unité de prélèvement selon l'une quelconque des revendications précédentes, **caractérisée en ce qu'**elle comprend en outre un moyen (1 ) de dilution des gaz d'échappement.

6. Unité de prélèvement selon la revendication 5, **caractérisée en ce que** ledit moyen de dilution comprend une sonde de dilution (20) ayant une entrée (G) pour les gaz prélevés et une sortie (23) connectée à l'entrée du circuit d'échantillonnage, et un micro tunnel (22) qui coopère avec ladite sonde.

7. Unité de prélèvement selon la revendication 6, **caractérisée en ce que** ledit micro-tunnel (22) comprend une sortie reliée à l'entrée de la sonde de dilution (20) par une liaison (21) pour de l'air de dilution, l'entrée du micro-tunnel recevant une partie des gaz dilués issus de la sonde de dilution (20).

8. Unité selon l'une quelconque des revendications précédentes, **caractérisée en ce qu'**elle comprend en outre un moyen de détection et d'alerte d'un dysfonctionnement de l'un des éléments de l'unité.

9. Procédé de prélèvement des aldéhydes et cétones contenus dans des gaz d'échappement dilués issus de machines thermiques à combustion consistant à piéger lesdits aldéhydes et cétones dans un circuit spécifique (2), **caractérisé en ce qu'**il consiste en outre à faire passer, pendant un certain temps, les gaz dilués dans un circuit de simulation (5) préalablement à leur passage dans le circuit de piégeage (2), les deux circuits étant disposés en parallèle.

10. Procédé selon la revendication 9, **caractérisé en ce qu'**on contrôle la température des gaz dans le circuit de piégeage (2).

11. Procédé selon l'une quelconque des revendications 9 ou 10, **caractérisé en ce qu'**on contrôle la pression des gaz en aval des circuits de simulation et de piégeage (2, 5).

12. Procédé selon l'une quelconque des revendications 9 à 11, **caractérisé en ce qu'**on fait passer les gaz dans le circuit de piégeage (2) lorsque l'on juge que la composition des gaz est suffisamment représentative.

## Patentansprüche

1. Einheit zur Entnahme der in Abgasen enthaltenen Aldehyde und Ketone, wobei die Abgase verdünnt sind und aus thermischen Verbrennungskraftmaschinen stammen, einen Kreis (2) zum Einfang der Aldehyde und Ketone sowie zugeordnete Regelmittel umfassend, **dadurch gekennzeichnet, dass** sie im übrigen einen Simulationskreis (5) zum Durchgang der Gase in den Einfangkreis (2) umfasst, parallel zum Einfangkreis angeordnet,
a. ein Mittel (8, 9), um die verdünnten Abgase entweder in den Einfangkreis oder in den Simulationskreis (5) zu leiten,
b. einen Temperatursensor bzw. -geber (4) vor dem Einfangkreis,
c. einen Drucksensor (11 ) hinter den beiden Kreisen (2, 5),
d. ein Steuerorgan für den spezifischen Massendurchsatz (12) und
e. ein Mittel, beispielsweise eine Pumpe (13), um die Gase in Zirkulation zu versetzen.

2. Entnahmeeinheit nach Anspruch 1, **dadurch gekennzeichnet, dass** der Einfangkreis (2) eine spezifische Kartusche oder einen spezifischen Einsatz (3) umfasst, die bzw. der in Reihe mit dem Temperatursensor oder Temperaturgeber (4) angeordnet ist.

3. Entnahmeeinheit nach einem der vorhergehenden Ansprüche, **dadurch gekennzeichnet, dass** der Simulationskreis (5) ein Filter (7) in Reihe mit einer Ventileinrichtung (6) umfasst.

4. Entnahmeeinheit nach einem der vorhergehenden Ansprüche, **dadurch gekennzeichnet, dass** das Mittel, um selektiv die verdünnten Gase zum Einfangkreis (2) oder Simulationskreis (5) umzuleiten zwei Drei-Weg-Magnetventile (8, 9) umfasst, die jeweils vor und hinter den beiden Parallelkreisen (2, 5) angeordnet sind.

5. Entnahmeeinheit nach einem der vorhergehenden Ansprüche, **dadurch gekennzeichnet, dass** sie im übrigen eine Einrichtung (1 ) zur Verdünnung der Auslassgase umfasst.

6. Entnahmeeinheit nach Anspruch 5, **dadurch gekennzeichnet, dass** die Verdünnungseinrichtung eine Verdünnungssonde (20) mit einem Eingang (G) für die entnommenen Gase und einen Ausgang, der mit dem Eingang des Probennahmekreises verbunden ist, sowie einen Mikrotunnel (22), der mit dieser Sonde zusammenwirkt, umfasst.

7. Entnahmeeinheit nach Anspruch 6, **dadurch gekennzeichnet, dass** dieser Mikrotunnel (22) einen Ausgang umfasst, der mit dem Eingang der Verdünnungssonde (20) über eine Verbindung (21) für Verdünnungsluft verbunden ist, wobei der Eingang des Mikrotunnels einen Teil der aus der Verdünnungssonde (20) stammenden Verdünnungsgase aufnimmt.

8. Einheit nach einem der vorhergehenden Ansprüche, **dadurch gekennzeichnet, dass** sie im übrigen ein Mittel zur Überwachung und zur Alarmgebung für einen Falschbetrieb eines der Elemente der Einheit umfasst.

9. Verfahren zur Entnahme der in Abgasen enthaltenen Aldehyde und Ketone, wobei die Abgase aus thermischen Verbrennungskraftmaschinen stammen, das darin besteht, diese Aldehyde und Ketone in einem spezifischen Kreis (2) einzufangen, **dadurch gekennzeichnet, dass** es im übrigen darin besteht, während eines gewissen Zeitraums die verdünnten Gase in einen Simulationskreis (5) vor ihrem Durchgang im Einfangkreis (2) zu leiten, wobei die Kreise parallel angeordnet sind.

10. Verfahren nach Anspruch 9, **dadurch gekennzeichnet, dass** man die Temperatur der Gase im Einfangkreis (2) regelt.

11. Verfahren nach einem der Ansprüche 9 oder 10, **dadurch gekennzeichnet, dass** man den Druck der Gase hinter den Simulations- und Einfangkreisen (2, 5) regelt.

12. Verfahren nach einem der Ansprüche 9 bis 11, **dadurch gekennzeichnet, dass** man die Gase in den Einfangkreis (2) leitet, sobald man abschätzt, dass die Zusammensetzung der Gase ausreichend repräsentativ ist.

## Claims

1. Unit for sampling aldehydes and ketones contained in pre-diluted exhaust gases from combustion heat machines, comprising a circuit (2) for trapping aldehydes and ketones, and associated control means, ***characterised by** the fact that* it also comprises a circuit (5) for simulation of the passage of the gases in the trapping circuit (2), arranged in parallel with the trapping circuit,
- a means (8, 9) for passing the dilute exhaust gases either in the trapping circuit or in the simulation circuit (5),
- a temperature sensor (4) upstream of the trapping means,
- a pressure sensor (11) downstream of the two circuits (2, 5),
- a mass flow rate regulator (12),
- a means for circulating the gases, such as a pump (13).

2. Sampling unit as described in claim 1, ***characterised by** the fact that* the trapping circuit (2) includes a specific cartridge (3) arranged in series with the temperature sensor (4).

3. Sampling unit as described in any one of the preceding claims, **characterised by** the fact that the simulation circuit (5) includes a filter (7) in series with a valving means (6).

4. Sampling unit as described in any one of the preceding claims, ***characterised by** the fact that* the means for selectively diverting the dilute gases to the trapping circuit (2) or the simulation circuit (5) comprises two three-way electro-valves (8, 9) arranged respectively upstream and downstream of the two parallel circuits (2, 5).

5. Sampling unit as described in any one of the preceding claims, ***characterised by** the fact that* it also comprises a means (1) for dilution of the exhaust gases.

6. Sampling unit as described in claim 5, ***characterised by** the fact that* the said dilution means comprises a dilution probe (20) having an intake (G) for the sampled gases and an outlet (23) connected to the intake of the sampling circuit, and a micro-tunnel (22) which cooperates with the said probe.

7. Sampling unit as described in claim 6, ***characterised by** the fact that* the said micro-tunnel (22) includes an outlet connected to the input of the dilution probe (20) by a connection (21) for the dilution air, the intake of the micro-tunnel receiving a part of the dilute gases leaving the dilution probe (20).

8. Unit as described in any one of the preceding claims, ***characterised by** the fact that* it also comprises a means for detecting and warning of malfunctioning of one of the elements of the unit.

9. Process for sampling aldehydes and ketones contained in diluted exhaust gases from combustion heat machines consisting of trapping the said aldehydes and ketones in a specific circuit (2), ***characterised by** the fact that* it also consists of passing the dilute gases, for a certain time, in a simulation circuit (5) prior to their passage in the trapping circuit (2), the two circuits being arranged in parallel.

10. Process as described in claim 9, ***characterised by** the fact that* the temperature of the gases in the trapping circuit (2) is controlled.

11. Process as described in any one of claims 9 or 10, ***characterised by** the fact that* the pressure of the gases is controlled downstream of the simulation and trapping circuits (2, 5).

12. Process as described in any one of claims 9 to 11, **characterised by** the fact that the gases are passed in the trapping circuit (2) when it is judged that the composition of the gases is sufficiently representative.
